# DEMANDE DE BREVET EUROPEEN

(11) **EP 2 886 522 A1**
(43) Date de publication de la demande: **24.06.2015**
(21) Numéro de dépôt: 14199445.9
(22) Date de dépôt: 19.12.2014
(51) Int. Cl.: C03C 17/34, C03C 25/34

(54) **Méthode pour réduire les émissions de formaldéhyde et de composés organiques volatils (COV) dans un produit à base de fibres minerales**

(30) Priorité: 23.12.2013 FR 1363452; 21.07.2014 FR 1457009
(71) Demandeur: Rockwool International A/S, 2640 Hedehusene (DK)
(72) Inventeur: Foury, Patrice, 63200 LE CHEIX (FR); Noirbousson, Angélique, 63700 SAINT ELOY LES MINES (FR)
(74) Mandataire: Cabinet Plasseraud

(57) **Abrégé**

La présente invention a pour objet un procédé de réduction d'émission de formaldéhyde et de COV d'un produit à base de fibres minérales encollées par une composition liant de type résine résol phénol-formaldéhyde, de préférence modifiée par une urée, ledit procédé comprenant l'étape d'addition d'un piégeur de formaldéhyde de type sulfate de polyamine audit produit après réticulation de la composition de liant appliquée sur les fibres minérales, ledit piégeur de formaldéhyde étant le sulfate d'hydrazine carboximidamide. L'invention a également pour objet des produits à base de fibres minérales tels que définis précédemment, ainsi que l'utilisation de formaldéhyde de type sulfate de polyamine comme piégeur de formaldéhyde dans ce type de produits, ledit sulfate de polyamine étant le sulfate d'hydrazine carboximidamide.

## Description

La présente invention a pour objet un procédé pour réduire les émissions de formaldéhyde et de composés organiques volatils (COV) d'un produit à base de fibres minérales, et des produits à base de fibres minérales ayant une faible émission de formaldéhyde et de composés organiques volatils (COV).

Les produits à base de fibres minérales comprennent généralement des fibres vitreuses artificielles (FVA) telles que, par exemple, les fibres de verre, les fibres céramiques, les fibres de basalte, la laine de laitier, la laine minérale et la laine de roche, qui sont liées entre elles par un liant polymérique thermodurcissable réticulé.

Lorsqu'elles sont utilisées comme produits d'isolation thermique et/ou acoustique, ces fibres sont mises en forme pour produire des couches de fibres minérales encollées au moyen d'un liant. Les produits à base de fibres sont formés par conversion d'une masse fondue faite des fibres et d'au moins un liant, par des méthodes bien connues, comme par exemple par un procédé de coupelle centrifuge ou par un procédé de rotor en cascade. Les fibres sont par exemple mises en suspension dans l'air dans une chambre de formage et, alors qu'elles sont encore chaudes, une solution de liant est pulvérisée sur les fibres. Les fibres sont ensuite déposées de manière aléatoire de manière à former une couche ou une bande prête à être chargée sur un convoyeur. La couche de fibres est ensuite transférée dans un four dans lequel de l'air chaud est soufflé à travers la couche pour faire réticuler et durcir le liant et encoller rigidement les fibres minérales entre elles.

Des liants phénoliques, en particulier des résines résol phénol-formaldéhyde, sont fréquemment utilisés dans la fabrication de matériaux isolants en fibres minérales, tels que les matelas isolants pour les murs, les panneaux de toit, les carreaux de plafond (plafond suspendu), les revêtements isolants pour tuyauteries, etc. Typiquement, lorsqu'une résine résol phénol-formaldéhyde est utilisée en tant que liant, une quantité importante de formaldéhyde est dégagée dans l'environnement pendant l'étape de réticulation. Le formaldéhyde peut également être libéré par la suite, une fois la résine réticulée. Une telle émission de formaldéhyde n'est pas acceptable, particulièrement dans les espaces clos, car il est dangereux pour la santé et pour l'environnement. En effet, le formaldéhyde a été classé comme substance cancérigène pour l'homme par le Centre international de Recherche sur le Cancer (CIRC) de l'Organisation mondiale de la Santé (OMS) (monographie du CIRC sur le formaldéhyde, Volume 88 (2006)).

Les contraintes réglementaires imposent donc de réduire au maximum les émissions de formaldéhyde dans l'environnement.

Diverses techniques ont été proposées pour réduire les émissions de formaldéhyde provenant des résines résol phénol-formaldéhyde. En particulier, divers capteurs de formaldéhyde ont été utilisés à cette fin. Par exemple, l'urée agit comme un capteur de formaldéhyde à la fois pendant et après la fabrication de produits en fibres minérales encollées. L'urée est généralement directement ajoutée à la résine phénol-formaldéhyde pour produire une résine résol phénol-formaldéhyde modifiée par l'urée. Pour obtenir un tel liant à base de résine de type résol modifiée par de l'urée, on peut notamment faire réagir un mélange de phénol et de formaldéhyde avec un catalyseur basique approprié en une ou plusieurs étapes. Les conditions de réaction, telles que la température, la quantité de catalyseur, etc, sont ajustées pour favoriser les réactions de méthylation du phénol plutôt que les réactions de condensation. L'urée est ensuite ajoutée juste avant l'utilisation de la résine. Une telle résine est généralement appelée résine PUF.

Un autre capteur de formaldéhyde connu est l'ammoniac qui se lie au formaldéhyde en formant des composés aminés tels que l'hexaméthylène tétramine. A titre d'exemple, le document WO 96/26164 décrit une résine phénol-formaldéhyde pour une utilisation comme liant dans des produits de laine minérale, dans laquelle la libération de phénol est réduite par excès stoechiométrique de formaldéhyde par rapport au phénol, la libération de formaldéhyde en excès étant réduite par ajout d'ammoniac en tant que piégeur de formaldéhyde et la libération d'ammoniac étant elle-même limitée par réaction avec un sucre.

D'autres compositions de liants thermodurcissables pour laine minérale de type résine résol phénol-formaldéhyde contenant des sucres sont connus dans l'art antérieur. Par exemple, le document WO 2006/136614 décrit une composition de liant similaire à celle du document WO 96/26164, mais en remplaçant l'ammoniac par l'hydroxylamine ou un amino-alcool.

Le document US-A-4339361 décrit des résines résols phénol-formaldéhyde convenant pour une utilisation dans les compositions de liant pour produits à base de fibres minérales comprenant un amide ou une amine telle que l'urée et un sucre. Le sucre peut être choisi parmi les mono-, les oligo- et les polysaccharides solubles dans l'eau.

Le document WO 2009/136106 décrit des compositions de liants pour laine minérale comprenant une résine phénolique liquide présentant une teneur en formaldéhyde libéré inférieure ou égale à 0,1% et un agent diluant. La résine phénol formaldéhyde peut être modifiée par une amine. Le diluant peut être choisi parmi les hydrates de carbone, notamment les monosaccharides, les oligosaccharides et les polysaccharides.

Le document US-A-5795934 décrit une composition de résine résol de type phénol-formaldéhyde modifiée par de l'urée qui comprend une alcanolamine seule ou, de préférence, en combinaison avec un monosaccharide ou un disaccharide en une quantité suffisante pour améliorer la stabilité au stockage de la résine résol phénolique modifiée par l'urée.

Le document WO 2008/127936 décrit des compositions liantes composites de type résol mettant en oeuvre une réaction de Maillard, comprenant une résine résol phénol-formaldéhyde ou une résine résol phénol-formaldéhyde modifiée par une urée et des réactifs de Maillard comprenant un mélange d'un monosaccharide et d'un sel d'ammonium d'un acide polycarboxylique.

Le document WO 2012/076462 décrit enfin un procédé de réduction d'émission de formaldéhyde d'un produit à base de fibres minérales liées avec une résine résol phénol-formaldéhyde modifiée par une urée, ledit procédé comprenant l'étape d'addition de dextrose à la résine pendant et/ou après la préparation de la résine, mais avant la réticulation de celle-ci une fois appliquée sur les fibres minérales. Ce procédé se fonde sur la découverte que le dextrose peut agir comme un capteur de formaldéhyde dans la fabrication de produits en fibres minérales encollées avec une composition de liant comprenant une résine résol phénol-formaldéhyde modifiée par une urée.

Toutefois, les contraintes réglementaires en matières d'émission de formaldéhyde sont de plus en plus strictes et les niveaux d'émission autorisés de plus en plus faibles. En outre, certains piégeurs de formaldéhydes disponibles sur le marché permettent certes une diminution sensible des émissions de formaldéhyde, mais présentent l'inconvénient de générer des composés organiques volatils (COV) indésirables, et dont les quantités libérées dans l'atmosphère sont également réglementées.

On est donc toujours à la recherche de compositions de liant à base de résine de type résol phénol-formaldéhyde, de préférence modifiée par une urée permettant de piéger efficacement le formaldéhyde sans générer d'émission d'autres COV indésirables.

La présente invention a donc pour objet, selon un premier aspect, un procédé de réduction d'émission de formaldéhyde et de COV d'un produit à base de fibres minérales encollées par une composition de liant de type résine résol phénol-formaldéhyde, de préférence modifiée par une urée, ledit procédé comprenant l'étape d'addition d'un piégeur de formaldéhyde de type sulfate de polyamine audit produit après réticulation de la composition de liant appliquée sur les fibres minérales, ledit sulfate de polyamine étant le sulfate d'hydrazine carboximidamide de formule :

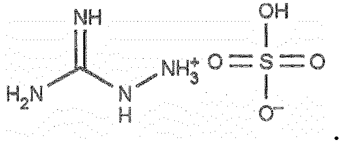

L'invention a également pour objet, selon un second aspect, un produit à base de fibres minérales présentant des émissions de formaldéhyde et de COV réduites, lesdites fibres étant encollées avec une composition de liant réticulée de type résine résol phénol-formaldéhyde, de préférence modifiée par une urée, ledit produit comprenant en outre un piégeur de formaldéhyde de type sulfate de polyamine ajouté après réticulation de la composition de liant appliquée sur les fibres minérales, ledit sulfate de polyamine étant le sulfate d'hydrazine carboximidamide de formule :

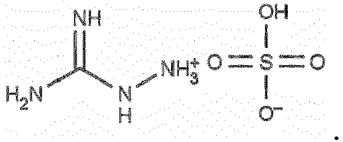

Les inventeurs on en effet mis en évidence que l'ajout d'un piégeur de formaldéhyde de type sulfate de polyamine permettait de réduire particulièrement efficacement les émissions de formaldéhyde, sans générer de COV lorsque ledit piégeur est appliqué sur un produit à base de fibres minérales encollé avec une composition de liant réticulée de type résine résol phénol-formaldéhyde modifiée par une urée comprenant, de préférence, au moins 15% de dextrose.

L'invention a encore pour objet, selon un troisième aspect, l'utilisation d'un piégeur de formaldéhyde de type sulfate de polyamine, ledit sulfate de polyamine étant le sulfate d'hydrazine carboximidamide de formule : 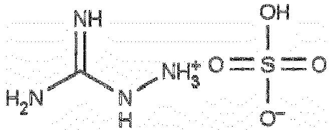 comme piégeur de formaldéhyde dans un produit à base de fibres minéral tel que décrit précédemment.

### Résine résol phénol-formaldéhyde

Conformément à la présente invention, la nature de la résine de résol phénol-formaldéhyde n'est pas critique, et toute résine résol phénol-formaldéhyde, de préférence modifiée par une urée connue dans le domaine peut être utilisée.

Toutefois, conformément à l'invention, l'obtention d'une résine urée-formaldéhyde (UF) uniquement n'est pas préférée, en d'autres termes la formation d'UF en une teneur conférant à la résine finale des propriétés de résine urée-formaldéhyde n'est pas préférée.

Des exemples spécifiques de résine de résol phénol-formaldéhyde modifiée par l'urée sont, par exemple, celles décrites dans les documents EP-A-148050, EP-A-810981, CA-A-1001788 et US-A-5371140, les résines phénoliques émulsionnables décrites dans EP-A-1084167, les résines phénoliques surcondensées décrites dans WO 99/03906 et WO 2009/136106.

Selon un mode préféré de réalisation, le phénol est mis à réagir avec un excès molaire de formaldéhyde (excès stoechiométrique de l'aldéhyde) en solution aqueuse. Le ratio de phénol sur aldéhyde est choisi pour donner une résine de type résol, lorsque le phénol et le formaldéhyde sont utilisés, le rapport molaire du phénol au formaldéhyde étant de préférence de 1: 2,5 à 1: 6, et plus préférentiellement de 1: 3 à 1: 5.

Le procédé de préparation de la résine résol peut mettre en oeuvre un catalyseur basique pouvant comprendre au moins un métal alcalin basic, un composé alcalino-terreux ou un catalyseur de type amine, par exemple la triéthylamine (TEA).

Des exemples de bases de métaux alcalins qui peuvent être utilisées comprennent les hydroxydes de sodium, de potassium et de lithium.

Des exemples de bases de métaux alcalino-terreux qui peuvent être utilisées comprennent les oxydes et hydroxydes de calcium, de baryum et de strontium, comme l'oxyde de calcium et l'hydroxyde de calcium.

La réaction de condensation exothermique du phénol et de l'aldéhyde a lieu après le mélange du phénol et de l'aldéhyde par l'addition du catalyseur.

Selon un mode de réalisation préféré, un mélange aqueux de formaldéhyde et de phénol est maintenu à une première température, par exemple, allant de 30 à 50°C lorsque le catalyseur basique est ajouté.

On laisse alors la température augmenter jusqu'à atteindre une seconde température réactionnelle, par exemple 60 à 90°C.

De préférence, la réaction est conduite pendant un temps de réaction suffisant et à une température appropriée pour permettre la synthèse d'une résine résol ayant une tolérance acide inférieure à 8, de préférence dans la gamme de 0,5 à 7, et plus préférentiellement de 3 à 5.

Le taux de conversion du phénol est de préférence supérieur à 95%, plus préférentiellement supérieur à 97%.

La tolérance à l'acide est une mesure du degré de réaction et est déterminée de la façon suivante: l'acide mis en oeuvre est une solution diluée d'acide sulfurique (2,5 ml d'acide sulfurique concentré ajouté à 1 litre d'eau distillée). 5,0 ml de résine résol est transférée dans un Erlenmeyer. L'acide dilué est ensuite ajouté à partir d'une burette tout en maintenant la résine sous agitation. Le titrage est poursuivi jusqu'à ce qu'un léger nuage apparaisse dans la résine, et ne disparaisse pas quand la résine est secouée.

La tolérance de l'acide est calculée en divisant la quantité d'acide (en ml) utilisée pour le titrage avec la quantité (en ml) de l'échantillon.

La résine résol phénol-formaldéhyde est, selon un mode préféré de réalisation, modifiée avec de l'urée. L'urée est alors de préférence ajoutée et/ou mise à réagir avec la résine résol phénol-formaldéhyde en une teneur allant de 20 à 60% en poids, de préférence de 30 à 50% en poids, par rapport au total des matières solides sèches de la résine résol phénol-formaldéhyde et de l'urée.

L'urée peut être ajoutée à la résine résol au cours de sa préparation ou lors d'une étape consécutive à la formation de la résine résol.

La résine résol phénol-formaldéhyde modifiée par de l'urée peut de préférence être ensuite diluée dans l'eau pour atteindre une teneur en matières solides allant de 10 à 30% en poids, de préférence de 15 à 25% en poids, et plus préférentiellement de 18 à 22% en poids.

Le mélange résine résol phénol-formaldéhyde modifiée par de l'urée peut être inactivé par addition d'un acide latent tel que le sulfate d'ammonium ou d'un acide tel que l'acide sulfurique.

### Dextrose

Selon un mode préféré de réalisation de l'invention, du dextrose peut être ajouté à la résine résol phénol-formaldéhyde après sa préparation, mais avant réticulation de la composition de liant appliquée sur les fibres minérales.

Le dextrose utilisé peut être du dextrose pur ou sous la forme d'une préparation de glucose ayant un DE équivalent d'environ 70 à 100, de préférence d'environ 90 à 100.

Le dextrose est classiquement produit par hydrolyse d'une suspension aqueuse d'amidon au moyen de chaleur, d'acides ou d'enzymes. Selon les conditions de réaction mises en oeuvre dans l'hydrolyse de l'amidon, on obtient une série de mélanges de glucose et des produits intermédiaires qui peuvent être caractérisés par leur valeur d'équivalent de dextrose (DE). L'équivalent de dextrose (DE) est défini comme la teneur en sucres réducteurs, exprimée en grammes de D-glucose anhydre pour 100 g de matière sèche dans l'échantillon, déterminée par la méthode spécifiée dans la norme internationale ISO 5377-1981 (F). Cette méthode mesure le taux de réduction des groupes terminaux de l'amidon, et fixe un DE de 100 pour le glucose pur (= dextrose), et un DE de 0 pour l'amidon pur.

Dans le cadre de la présente invention, on utilise de préférence du dextrose pur ou du sirop de glucose à haut DE.

La composition de liant non réticulée peut notamment comprendre une quantité de dextrose allant de 15 à 70% en poids, de préférence de 20 à 50% en poids, par rapport au total des matières solides sèches de la résine résol phénol-formaldéhyde et de dextrose.

On préfère utiliser des quantités plus faibles de dextrose comme par exemple 15% en poids, 20% en poids, 25% en poids, 30% en poids, 35% en poids, 40% en poids ou 45% en poids.

Selon les propriétés désirées et le type ou la quantité de générateurs de formaldéhyde présents, l'homme introduira le dextrose dans des gammes de concentrations appropriées dans ces fourchettes.

### Additifs de la composition de liant

La composition de liant mise en oeuvre selon l'invention peut également comprendre, outre la résine résol phénol-formaldéhyde, de préférence modifiée par de l'urée et optionnellement le dextrose, de l'eau, et un ou plusieurs additifs classiques.

Les additifs peuvent, par exemple, être des accélérateurs de réticulation tels que des acides forts sous forme libre ou sous forme de sels, lesdits acides forts pouvant être choisis parmi l'acide borique, l'acide sulfurique, l'acide nitrique et l'acide p-toluène-sulfonique qui peut être utilisé soit seul, soit en combinaison avec du carbonate de guanidine.

D'autres additifs pouvant être introduits dans les compositions de liant selon l'invention sont, par exemple, des agents de couplage silane tels que la γ-aminopropyltriéthoxysilane, des stabilisants thermiques, des stabilisants UV, des émulsionnants, des agents tensio-actifs, en particulier non ioniques, des biocides, des plastifiants, des agents anti-migration, des agents de coalescence, des charges et des diluants tels que l'amidon, l'argile, les silicates et l'hydroxyde de magnésium, des pigments comme le dioxyde de titane, des colorants, des agents d'hydrofugation tels que des composés fluorés, des huiles minérales et des huiles de silicone, les agents ignifugeants, les inhibiteurs de corrosion tels que la thio-urée, des agents anti-mousse, des antioxydants, et leurs mélanges.

Ces additifs peuvent être introduits dans la composition de liant en une teneur usuelle, ne dépassant de préférence pas 20% en poids des matières solides dudit liant.

La quantité de l'accélérateur de réticulation est généralement comprise entre 0,05 et 5% en poids des matières solides du liant.

La composition finale de liant aqueuse présente généralement une teneur en matières solides de 1 à 20% en poids et un pH de 6 ou plus.

Selon un mode préféré de réalisation, la composition de liant selon la présente invention ne contient pas l'un des composants suivants: l'hydroxylamine; les aminoalcools; les aminoalcanols, les acides polycarboxyliques et les sels d'ammonium d'acides carboxyliques, des alcools de sucre.

### Produit à base de fibres minérales

Les fibres minérales utilisées pour la fabrication des produits selon la présente demande peuvent être choisies parmi les fibres synthétiques vitreuses artificielles (FVA), les fibres de verre, les fibres céramiques, les fibres de basalte, les fibres de laitier, les fibres de roche, les fibres de pierre ou tout autre fibre minérale connue de l'homme du métier.

Ces fibres peuvent être utilisées sous forme de laines minérales, comme par exemple la laine de roche.

Les procédés de formation des fibres et les étapes de production ultérieures mises en oeuvre pour la fabrication du produit à base de fibres minérales sont ceux classiquement utilisés dans le domaine.

Généralement, la composition de liant est pulvérisée sur les fibres minérales en suspension immédiatement après leur fabrication à partir de la matière minérale fondue. La composition de liant utilisée pour la préparation des produits selon l'invention comprend de préférence du dextrose en une quantité allant de 15 à 70% en poids, de préférence de 20 à 50% en poids, par rapport au poids total en matières sèches de la résine de résol phénol-formaldéhyde et du dextrose.

La composition de liant, le plus souvent aqueuse, est généralement appliquée en une teneur allant de 0,1 à 10%, de préférence de 0,2 à 8% en poids, par rapport au poids total de la matière sèche du produit comprenant les fibres et le liant.

La couche en fibres minérales revêtue de la composition de liant par pulvérisation peut ensuite être durcie par réticulation du liant dans un four au moyen d'un courant d'air chaud. Le courant d'air chaud peut être introduit dans la couche de fibres minérales par le dessous, par le dessus, ou à différentes zones en alternance. Le four est généralement opéré à une température allant de 150 à 350 °C, de préférence de 200 à 300 °C. Le temps de séjour dans le four est généralement compris entre 30 secondes et 20 minutes, en fonction par exemple de la densité du produit.

Selon un mode de réalisation, il est également possible de soumettre la couche de laine minérale à un processus de mise en forme avant le durcissement. Alternativement, les produits à base de fibres minérales encollées peuvent être coupés dans le format souhaité, par exemple sous la forme d'une couche, après la sortie du four.

Ainsi, les produits à base de fibres minérales produits selon l'invention peuvent, par exemple, prendre la forme d'un tapis, de nattes, de dalles, de feuilles, de plaques, de bandes, de rouleaux, de panneaux, de sections de tuyaux, de granulés, ou toute autre forme souhaitée.

Selon un mode particulier de réalisation de la présente invention, les produits à base de fibres minérales peuvent être des dalles de plafond présentant une densité de 50 à 220 kg/m³ et fabriquées à partir d'une composition de liant non réticulée comprenant du dextrose en une quantité allant de 20 à 70% en poids, de préférence de 25 à 60% en poids, par rapport au poids total en matières sèches de la résine de résol phénol-formaldéhyde et du dextrose.

Un autre groupe de produits à base de fibres minérales pouvant être obtenus selon la présente invention sont des panneaux de toit présentant une densité allant de 100 à 250 kg/m³ et fabriqués à partir d'une composition de liant non réticulée comprenant du dextrose en une quantité allant de 10 à 60% en poids, de préférence 20 à 50% en poids, par rapport au poids total en matières sèches de la résine de résol phénol-formaldéhyde et du dextrose.

Il existe essentiellement deux types de panneaux de toit: les panneaux de toit mono-densité et les panneaux de toit double densité tels que décrits, par exemple dans les documents EP-A-88998 et EP-A-1456444.

Les panneaux de toit double densité préférés présentent une couche supérieure de densité comprise entre 100 à 250 kg/m³ et une couche inférieure de densité généralement inférieure ou égale à 80%, mais le plus souvent plus de 30% de la densité de la couche supérieure, souvent de 40 à 70% de la densité de la couche supérieure.

Généralement, les couches supérieure et inférieure dans le produit final ont une épaisseur totale de 30 à 300 mm.

La couche inférieure présente usuellement une épaisseur allant de 25 à 275 mm, et en général d'au moins 75 mm. Elle est en général d'au moins 50%, et souvent de 75 à 95%, de l'épaisseur combinée des couches supérieure et inférieure.

Un autre groupe de produits à base de fibres minérales pouvant être obtenus selon la présente invention sont des panneaux de produits d'isolation de bâtiment ou d'un rouleau ayant une densité de 5 à 70 kg/ m³ et fabriqués à partir d'une composition de liant non réticulée comprenant du dextrose en une quantité allant de 10 à 60% en poids, de préférence 20 à 50% en poids, par rapport au poids total en matières sèches de la résine de résol phénol-formaldéhyde et du dextrose.

Dans le cadre de la présente invention, il est également possible de produire des matériaux composites par combinaison du produit à base de fibres minérales encollées avec des couches composites appropriées ou des couches stratifiées telles que, par exemple, du métal, des voiles de verre et d'autres matériaux tissés ou non tissés.

Les produits à base de fibres minérales selon la présente invention sont de couleur claire, parfois plus ou moins brunâtres selon la quantité de dextrose introduite dans le liant.

### Piégeur de formaldéhyde de type sulfate de polyamine

Les produits à base de fibres minérales présentant des émissions de formaldéhyde et de COV réduites comprennent en outre un piégeur de formaldéhyde de type sulfate de polyamine ajouté après réticulation de la composition de liant appliquée sur les fibres minérales, ledit sulfate de polyamine se présente notamment sous la forme d'un sel d'hydrazine carboximidamide, et plus particulièrement d'un sel de sulfate.

Ainsi, le piégeur de formaldéhyde de type le sulfate de polyamine est le sulfate d'hydrazine carboximidamide (aussi appelé carbazamidine sulfate en terminologie anglo-saxonne) de formule : 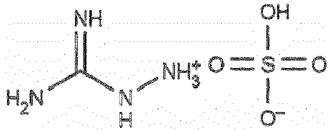 dont le numéro CAS est 2834-84-6.

Le piégeur de formaldéhyde est notamment appliqué sur les produits par pulvérisation d'une solution aqueuse de sulfate de polyamine présentant une teneur en sulfate de polyamine allant de 1 à 50% en poids, de préférence 5 à 40% en poids, et plus préférentiellement de 5 à 25% en poids, par rapport au poids total de la solution aqueuse de sulfate de polyamine.

Le piégeur de formaldéhyde de type sulfate de polyamine selon l'invention est, selon un mode particulièrement préféré de réalisation, le sulfate d'hydrazine carboximidamide commercialisé sous forme de solution aqueuse sous la référence Synthro Stab TF 275 par la société Synthron.

Le sulfate de polyamine est ajouté au produit à base de fibres minérales selon l'invention en une teneur allant de 1 à 200 g/m² de surface de produit, de préférence de 3 à 100 g/m², et plus préférentiellement de 5 à 60 g/m².

Les produits à base de fibres minérales selon la présente invention présentent généralement une densité allant de 5 à 250 kg/m³, de préférence de 20 à 200 kg/m³.

Les produits de fibres minérales selon la présente invention satisfont aux exigences d'émission de formaldéhyde des normes internationales de l'industrie de la construction comme il apparaît à la lecture des exemples.

Les exemples suivants sont destinés à illustrer l'invention sans en limiter la portée.

Sauf indication contraire, la teneur en matière sèche (MS) est ici déterminée à 200 °C, au bout d'1 heure et est exprimée en pourcentage en poids.

### Exemple 1

On a préparé des résines phénol-formaldéhyde en faisant réagir du formaldéhyde et du phénol dans un rapport molaire de 3,7 à 1 en présence d'un catalyseur (6% en poids de KOH par rapport à la quantité de phénol), à une température de réaction de 84°C. La réaction est poursuivie jusqu'à ce que la tolérance à l'acide de la résine soit de 4 et que la majeure partie du phénol soit convertie. De l'urée est ensuite ajoutée dans les quantités indiquées dans le tableau 1 ci-dessous. On ajoute enfin du sulfate d'ammonium en quantité équimolaire à celle du catalyseur, de manière à inactiver le catalyseur.

Dans le cas de la composition de liant 3, la résine PUF ainsi obtenue est ensuite mélangée avec une préparation dextrose, Sirodex® 431 de Syral (DE valeur 95), dans les teneurs indiquées dans le tableau 1 ci-dessous.

Les compositions des liants ainsi obtenus sont reprises dans le tableau 1 ci-après :

**Tableau 1:**

| | Liant 1 | Liant 2 | Liant 3 |
|---|---|---|---|
| Résine phénol-formaldéhyde | **72**% en poids | **55**% en poids | **30**% en poids |
| Urée | **28**% en poids | **45**% en poids | **25**% en poids |
| Dextrose | - | - | **45**% en poids |

La teneur en résine phénol-formaldéhyde, la teneur en urée et la teneur en dextrose sont des pourcentages en poids, par rapport au poids total des matières solides sèches de la résine de résol phénol-formaldéhyde modifiée urée et du dextrose.

Les compositions de liants obtenues sont ensuite diluées dans l'eau pour atteindre une teneur en matières solides environ égale à 19%, et une aminosilane pré-hydrolysée commerciale est ajoutée en une quantité correspondant à 0,5% des matières solides.

### Exemple 2

Les compositions de liant 1 à 3 obtenues dans l'exemple 1 ont été utilisées pour la production de panneaux en monocouches selon les étapes suivantes :
1. On a formé des fibres minérales par des méthodes de filage connues de l'homme du métier,
2. On a appliqué la composition de liant souhaitée sur les fibres encore chaudes,
3. On a mis en forme les fibres imprégnées de manière à former des panneaux monocouches,
4. On a fait durcir les panneaux monocouches par réticulation des compositions de liant dans un four,
5. On a ensuite appliqué le piégeur de formaldéhyde de type sulfate d'hydrazine carboximidamide de numéro CAS 2834-84-6(Synthro Stab TF 275) par pulvérisation sur les panneaux monocouches encollés par la résine réticulée,
6. Optionnellement, on a ajouté du voile de verre, soit sur une face du panneau formé, soit sur ses deux faces, le voile de verre n'ayant pas d'incidence sur les émissions de formaldéhyde et permettant de préparer la surface du panneau à l'application ultérieure de peinture,
7. Optionnellement, on a coupé les panneaux obtenus selon l'usage final souhaité,
8. Et optionnellement on a peint les panneaux ainsi obtenus.

Des panneaux ayant les compositions suivantes ont ainsi été préparés :

**Tableau 2 :**

| Panneaux | Composition du liant utilisé |
|---|---|
| #**1** | Liant 1 |
| #**2** | Liant 1 + 5mg/m² de piégeur de formaldéhyde Synthro Stab TF275 |
| #**3** | Liant 1 + 30mg/m² de piégeur de formaldéhyde Synthro Stab TF275 |
| #**4** | Liant 2(*) |
| #**5** | Liant 2 + 60mg/m² de piégeur de formaldéhyde Synthro Stab TF275 (*) |
| #**6** | Liant 3 |
| #**7** | Liant 3 + 5mg/m² de piégeur de formaldéhyde Synthro Stab TF275 |
| #**8** | Liant 3 + 30mg/m² de piégeur de formaldéhyde Synthro Stab TF275 |

| | |
|---|---|
| (*) les panneaux ne sont pas revêtus de voile de verre et ne sont pas peints. | |

L'émission de formaldéhyde est mesurée pour les produits #1 à #8.

Les émissions ont été mesurées par le laboratoire indépendant selon la norme IS016000-3 sur les produits stockés à température ambiante.

Les échantillons ont été reçus par le laboratoire d'Eurofins Product Testing A/S dans un emballage hermétique. Les paquets ont été ouverts et les échantillons ont été coupés et placés dans des bacs en acier inoxydable, ou où les bords et et l'arrière étaient recouverts de papier aluminium. Les échantillons ont été transférés dans les chambres d'essai immédiatement.

La chambre de test est en acide inoxydable et présente un volume de 119 Litres.

On a d'abord fait un contrôle de référence de l'enceinte vide, à 23°C, 50% d'humidité relative et un renouvellement d'air toutes les demi-heures.

On a ensuite introduit les échantillons de panneaux de fibres minérales encollées les uns après les autres dans la chambre de test, et on a mesuré les émissions de formaldéhyde par prélèvement d'échantillons d'air en sortie de chambre au moyen de tubes de silicagel enrobés 2,4-nitrophénylhydrazine (DNPH). L'analyse a été effectuée par désorption de solvant, HPLC couplée un détecteur UV selon la norme ISO 16000-3.

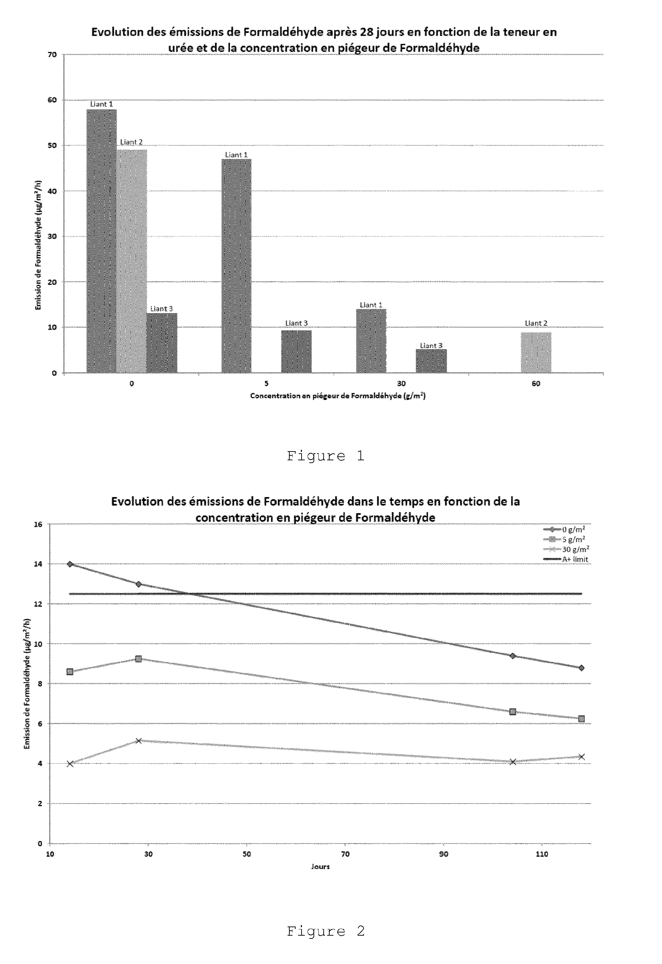

Les résultats obtenus sont présentés dans les figures 1 et 2.

Il apparaît que l'introduction du piégeur de formaldéhyde de type sulfate d'hydrazine carboximidamide de numéro CAS 2834-84-6 (Synthro Stab TF 275) permet de limiter sensiblement les émissions de formaldéhyde à 28 jours des panneaux à base de fibres minérales encollées avec une résine résol phénol-formaldéhyde modifiée par de l'urée.

Les résultats de réduction des émissions de formaldéhyde sont particulièrement significatifs avec une composition de liant comprenant une résine résol phénol-formaldéhyde modifiée par de l'urée comprenant du dextrose.

Les panneaux selon l'invention n'émettent par ailleurs pas d'autres COV indésirables.

## Revendications

1. Procédé de réduction d'émission de formaldéhyde et de COV d'un produit à base de fibres minérales encollées par une composition de liant de type résine résol phénol-formaldéhyde, de préférence modifiée par une urée, ledit procédé comprenant l'étape d'addition d'un piégeur de formaldéhyde de type sulfate de polyamine audit produit après réticulation de la composition de liant appliquée sur les fibres minérales, ledit sulfate de polyamine étant le sulfate d'hydrazine carboximidamide de formule :

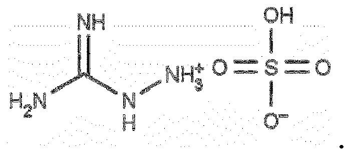

2. Procédé selon la revendication 1, dans lequel le phénol est mis à réagir avec un excès molaire de formaldéhyde en solution aqueuse dans un rapport molaire de 1: 2,5 à 1: 6, de préférence de 1: 3 à 1: 5, en présence d'un catalyseur basique.

3. Procédé selon l'une quelconque des revendications précédentes, dans lequel l'urée est ajoutée et/ou mise à réagir avec la résine résol phénol-formaldéhyde en une teneur allant de 20 à 60% en poids, de préférence de 30 à 50% en poids, par rapport au total des matières solides sèches de la résine résol phénol-formaldéhyde et de l'urée.

4. Procédé selon la revendication précédente, dans lequel la composition de liant non réticulée comprend une quantité de dextrose allant de 15 à 70% en poids, de préférence de 20 à 50% en poids, par rapport au total des matières solides sèches de la résine résol phénol-formaldéhyde et de dextrose.

5. Procédé selon l'une quelconque des revendications 1 à 4, dans lequel le piégeur de formaldéhyde est appliqué sur les produits par pulvérisation d'une solution aqueuse de sulfate de polyamine présentant une teneur en sulfate de polyamine allant de 1 à 50% en poids, de préférence 5 à 40% en poids, et plus préférentiellement de 5 à 25% en poids, par rapport au poids total de la solution aqueuse de sulfate de polyamine.

6. Procédé selon la revendication 1 à 4, dans lequel le piégeur de formaldéhyde est ajouté au produit à base de fibres minérales en une teneur allant de 1 à 200 g/m² de surface de produit, de préférence de 3 à 100 g/m², et plus préférentiellement de 5 à 60 g/m².

7. Produit à base de fibres minérales présentant des émissions de formaldéhyde et de COV réduites, lesdites fibres étant encollées avec une composition de liant réticulée de type résine résol phénol-formaldéhyde modifiée par une urée, ledit produit comprenant en outre un piégeur de formaldéhyde de type sulfate de polyamine ajouté après réticulation de la composition de liant appliquée sur les fibres minérales, ledit sulfate de polyamine étant le sulfate d'hydrazine carboximidamide de formule :

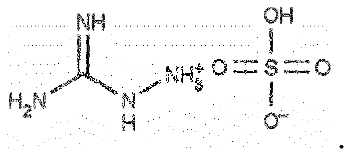

8. Produit à base de fibres minérales selon la revendication 7, dans lequel la composition de liant, le plus souvent aqueuse, est appliquée en une teneur allant de 0,1 à 10%, de préférence de 0,2 à 8% en poids, par rapport au poids total de la matière sèche du produit comprenant les fibres et le liant.

9. Produit à base de fibres minérales selon l'une quelconque des revendications 7 ou 8, dans lequel la composition de liant comprend du dextrose en une quantité allant de 15 à 70% en poids, de préférence de 20 à 50% en poids, par rapport au poids total en matières sèches de la résine de résol phénol-formaldéhyde et du dextrose.

10. Produit à base de fibres minérales selon l'une quelconque des revendications 7 à 9, dans lequel le piégeur de formaldéhyde est ajouté en une teneur allant de 1 à 200 g/m² de surface de produit, de préférence de 3 à 100 g/m², et plus préférentiellement de 5 à 60 g/m².

11. Produit à base de fibres minérales selon l'une quelconque des revendications 7 à 10, qui se présente sous la forme de dalles de plafond présentant une densité de 50 à 220 kg/m³ et fabriquées à partir d'une composition de liant non réticulée comprenant du dextrose en une quantité allant de 20 à 70% en poids, de préférence de 25 à 60% en poids, par rapport au poids total en matières sèches de la résine de résol phénol-formaldéhyde et du dextrose.

12. Produit à base de fibres minérales selon l'une quelconque des revendications 7 à 11, qui se présente sous la forme de panneaux de toit présentant une densité allant de 100 à 250 kg/m³ et fabriqués à partir d'une composition de liant non réticulée comprenant du dextrose en une quantité allant de 10 à 60% en poids, de préférence 20 à 50% en poids, par rapport au poids total en matières sèches de la résine de résol phénol-formaldéhyde et du dextrose.

13. Produit à base de fibres minérales selon l'une quelconque des revendications 7 à 12, qui se présente sous la forme de panneaux de produits d'isolation de bâtiment ou d'un rouleau ayant une densité de 5 à 70 kg/ m³ et fabriqués à partir d'une composition de liant non réticulée comprenant du dextrose en une quantité allant de 10 à 60% en poids, de préférence 20 à 50% en poids, par rapport au poids total en matières sèches de la résine de résol phénol-formaldéhyde et du dextrose.

14. Utilisation d'un sulfate de polyamine comme piégeur de formaldéhyde dans un produit à base de fibres minérales selon l'une quelconque des revendications 7 à 13, ledit sulfate de polyamine étant le sulfate d'hydrazine carboximidamide de formule :
